# EUROPEAN PATENT APPLICATION

(11) **EP 4 752 340 A1**
(43) Date of publication of application: **03.06.2026**
(21) Application number: 24846090.9
(22) Date of filing: 26.07.2024
(51) Int. Cl.: F01N 3/10, F01N 3/20, F01N 9/00, B63H 21/32, F01N 3/08, F01N 3/04

(54) **EXHAUST GAS AFTERTREATMENT SYSTEM AND SHIP COMPRISING SAME**

(30) Priority: 27.07.2023 KR 20230098116; 23.10.2023 KR 20230142169; 18.04.2024 KR 20240052167
(71) Applicant: Hyundai Heavy Industries Co., Ltd., Ulsan 44032 (KR)
(72) Inventor: LEE, Jung Ju, Ulsan 44032 (KR); KIM, Tae Hwan, Ulsan 44032 (KR); KWON, Young Woo, Ulsan 44032 (KR)
(74) Representative: Ribeiro, James Michael
(86) International application number: PCT/KR2024/010956
(87) International publication number: WO 2025/023789

(57) **Abstract**

The present invention is an exhaust gas post-processing system which comprises a selective catalytic reduction device provided on a selective catalytic reduction line; a methane oxidation catalyst device provided on a methane oxidation catalyst line; and a bypass line through which exhaust gas bypasses so as not to pass through the selective catalytic reduction device and the methane oxidation catalyst device, wherein the selective catalytic reduction line, the methane oxidation catalyst line, and the bypass line are configured in parallel, and the selective catalytic reduction device and the methane oxidation catalyst device are disposed adjacent to each other to enable heat transfer therebetween.

## Description

### [Technical Field]

### Cross-Citation to Related Applications

This application claims the benefits of priorities based on Korean Patent Application No. 10-2023-0098116 filed on July 27, 2023, Korean Patent Application No. 10-2023-0142169 filed on October 23, 2023, and Korean Patent Application No. 10-2024-0052167 filed on April 18, 2024, the entire contents of which are incorporated herein as part of this specification.

### Technical Field

The present invention relates to an exhaust gas post-processing system in which a methane oxidation catalytic reaction and a selective catalytic reduction reaction occur. The present invention also relates to a ship including such an exhaust gas post-processing system.

### [Background Art]

When fuel is burned in an engine, exhaust gas is generated. The exhaust gas contains harmful substances such as nitrogen oxides, methane, and sulfur oxides, and regulations against these substances are becoming increasingly strict. Therefore, research is being conducted on exhaust gas post-processing systems that remove harmful substances contained in exhaust gases to satisfy the emission required by these regulations.

The post-processing device that exhaust gas passes through varies depending on the fuel. For example, when diesel fuel is used, exhaust gas passes through a selective catalytic reduction device to remove nitrogen oxides contained in the exhaust gas, and when natural gas is used, exhaust gas passes through a methane oxidation catalyst device to remove methane contained in the exhaust gas.

Recently, ships often use multiple fuels to power the engines, and some are equipped with both selective catalytic reduction devices and methane oxidation catalyst devices. In this case, the type of post-processing device that exhaust gas passes through varies depending on the fuel used.

At this time, there is a need to utilize the space inside the ship through compactness of the exhaust gas post-processing system that includes the selective catalytic reduction device and the methane oxidation catalyst device. Furthermore, since both the selective catalytic reduction device and the methane oxidation catalyst device actively undergo catalytic reactions at high temperatures, there is a need to continuously supply heat to the post-processing device.

### [Disclosure]

### [Technical Problem]

The present invention is intended to facilitate the utilization of space inside a ship through a compact exhaust gas post-processing system.

In addition, the present invention is intended to efficiently utilize the heat within the exhaust gas post-processing system.

In addition, the present invention is intended to provide a ship including the exhaust gas post-processing system according to the present invention.

### [Technical Solution]

An exhaust gas post-processing system according to an embodiment of the present invention includes a selective catalytic reduction device provided on a selective catalytic reduction line; a methane oxidation catalyst device provided on a methane oxidation catalyst line; and a bypass line through which exhaust gas bypasses so as not to pass through the selective catalytic reduction device and the methane oxidation catalyst device, wherein the selective catalytic reduction line, the methane oxidation catalyst line, and the bypass line may be configured in parallel, and the selective catalytic reduction device and the methane oxidation catalyst device may be disposed adjacent to each other to enable heat transfer therebetween.

In an example, the bypass line may be disposed adjacent to at least one of the selective catalytic reduction device or the methane oxidation catalyst device to enable heat transfer with at least one of the selective catalytic reduction device and the methane oxidation catalyst device.

In an example, the system may further include a control unit that controls exhaust gas generated from diesel fuel to flow through the selective catalytic reduction line or the bypass line, and controls exhaust gas generated from gas fuel to flow through the methane oxidation catalyst line or the bypass line.

In an example, at least one region of the selective catalytic reduction device, the methane oxidation catalyst device, and the bypass line may be disposed inside a single housing.

An exhaust gas post-processing system according to an embodiment of the present invention includes a selective catalytic reduction device provided on a selective catalytic reduction line; a methane oxidation catalyst device provided on a methane oxidation catalyst line; and a control unit configured to control exhaust gas generated from diesel fuel to flow through the selective catalytic reduction line, and control exhaust gas generated from gas fuel to flow through the methane oxidation catalyst line, wherein the selective catalytic reduction line and the methane oxidation catalyst line are configured in parallel, and the selective catalytic reduction device and the methane oxidation catalyst device are disposed adjacent to each other to enable heat transfer therebetween, and the control unit may control exhaust gas to flow through the selective catalytic reduction line when bypassing exhaust gas generated from the gas fuel.

In an example, the selective catalytic reduction device and the methane oxidation catalyst device may be disposed inside a single housing.

An exhaust gas post-processing system according to an embodiment of the present invention includes a selective catalytic reduction device provided on an exhaust gas main line; a methane oxidation catalyst device provided on the exhaust gas main line at a rear stage of the selective catalytic reduction device; and a first bypass line configured to branch off from the exhaust gas main line between the selective catalytic reduction device and the methane oxidation catalyst device and bypass the methane oxidation catalyst device, wherein the methane oxidation catalyst device and the first bypass line may be disposed adjacent to each other to allow heat transfer each other.

In an example, the system may further include a second bypass line configured to branch off from the exhaust gas main line at a front stage of the selective catalytic reduction device and bypass the selective catalytic reduction device.

In an example, the system may further include a control unit configured to control exhaust gas generated from diesel fuel to flow through the first bypass line via the selective catalytic reduction device, and control exhaust gas generated from gas fuel to flow through the methane oxidation catalyst device or the first bypass line via the selective catalytic reduction device.

In an example, the system may further include a control unit configured to control exhaust gas generated from diesel fuel to flow through the first bypass line via the selective catalytic reduction device or the second bypass line, and control exhaust gas generated from gas fuel to flow through the methane oxidation catalyst device or the first bypass line via the selective catalytic reduction device or the second bypass line.

In an example, the methane oxidation catalyst device and at least one region of the first bypass line may be disposed inside a single housing.

In an example, the methane oxidation catalyst device and at least one region of the first bypass line may be disposed inside a single housing, or the selective catalytic reduction device and at least one region of the second bypass line may be disposed inside a single housing.

A ship may include the exhaust gas post-processing system according to an embodiment of the present invention.

### [Advantageous Effects]

According to the present invention, the use of space inside the ship can be facilitated through a compact exhaust gas post-processing system.

The present invention can efficiently utilize heat within the exhaust gas post-processing system.

### [Description of Drawings]

FIG. 1 is a diagram illustrating an exhaust gas post-processing system according to a first embodiment of the present invention.
FIG. 2 is a diagram illustrating a specific configuration of the exhaust gas post-processing system according to the first embodiment of the present invention.
FIG. 3 is a diagram illustrating an exhaust gas post-processing system according to a second embodiment of the present invention.
FG. 4 is a diagram illustrating an exhaust gas post-processing system according to a third embodiment of the present invention.

### [Best Mode]

Hereinafter, some embodiments of the present invention will be described in detail with reference to exemplary drawings. When assigning reference numerals to components in each drawing, it should be noted that identical components have the same numerals as far as possible, even when represented in other drawings. Further, in describing embodiments of the present invention, if a detailed description of related known structures or functions is determined to hinder understanding of the embodiments of the present invention, such a detailed description will be omitted.

In addition, when describing components of embodiments of the present invention, terms such as "first," "second," "A," "B," "(a)," and "(b)" may be used. These terms are used only to distinguish the component from other components, and the nature, order or sequence of the components are not limited by the terms. When a component is described as being "connected," "coupled," or "accessed" to another component, it should be understood that the component can be directly connected or accessed to the another component, but that other components can also be "connected," "coupled," or "accessed" between the respective components.

In this specification, the terms "front-back direction," "left-right direction," and "up-down direction" are used for convenience of explanation, and may be directions orthogonal to each other. However, these directions are determined relative to each other, and the "up-down" direction may not necessarily mean a vertical direction.

### <First Example>

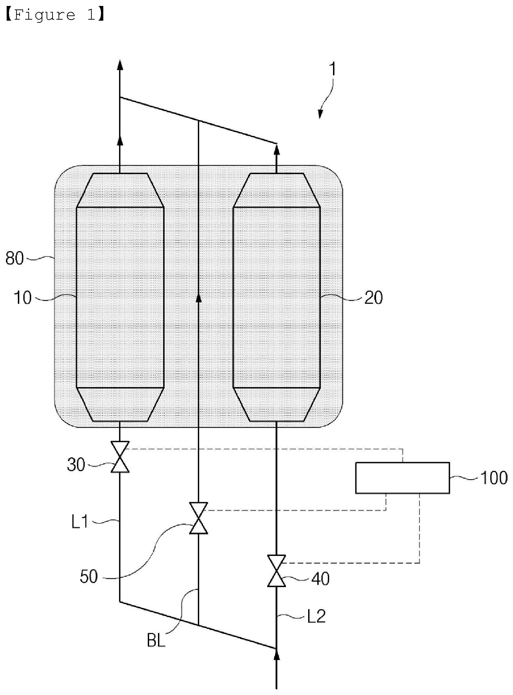

FIG. 1 is a diagram illustrating an exhaust gas post-processing system according to a first embodiment of the present invention.

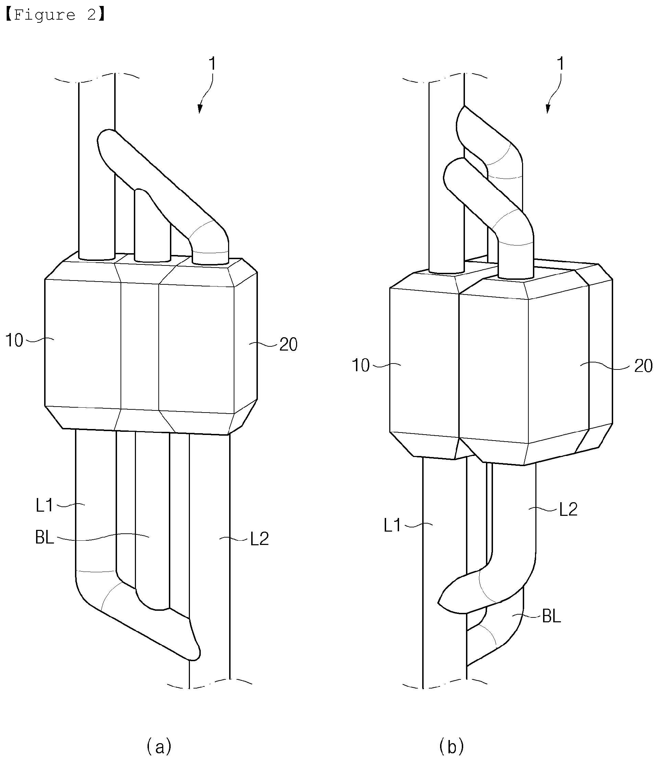

FIG. 2 is a diagram illustrating a specific configuration of the exhaust gas post-processing system according to the first embodiment of the present invention.

Referring to FIG. 1, the exhaust gas post-processing system 1 according to the first embodiment of the present invention includes a selective catalytic reduction device 10 provided on a selective catalytic reduction line L1; a methane oxidation catalyst device 20 provided on a methane oxidation catalyst line L2; and a bypass line BL through which exhaust gas is bypassed without passing through the selective catalytic reduction device 10 and the methane oxidation catalyst device 20, wherein the selective catalytic reduction line L1, the methane oxidation catalyst line L2, and the bypass line BL are configured in parallel, and the selective catalytic reduction device 10 and the methane oxidation catalyst device 20 are disposed adjacent to each other to enable heat transfer therebetween. Each component will be described in detail below.

The selective catalytic reduction device 10 is a device that makes nitrogen oxides contained in exhaust gas react with each other using a reducing agent and a denitrification catalyst to reduce them to nitrogen and water, which are harmless to humans, and then discharges the reduced nitrogen oxides. A control unit 100 controls exhaust gas generated by a diesel fuel engine to remove nitrogen oxides, while passing through the selective catalytic reduction device 10 on the selective catalytic reduction line L1. At this time, a device for supplying a reducing agent can be provided at a front stage of the selective catalytic reduction device 10. For example, a urea water (ammonia) injector and a mixer can be used to supply the reducing agent to the selective catalytic reduction device 10.

For example, the control unit 100 opens the valve 30 at the front stage of the selective catalytic reduction device 10 and closes the valve 50 on the bypass line and the valve 40 at the front stage of the methane oxidation catalyst device 20, thereby controlling the exhaust gas generated by a diesel fuel engine to flow along the selective catalytic reduction line L1.

The methane oxidation catalyst device 20 is a device that oxidizes and removes methane contained in exhaust gas. The control unit 100 controls exhaust gas generated by a natural gas engine to remove the methane, while passing through the methane oxidation catalyst device 20 on the methane oxidation catalyst line L2.

For example, the control unit 100 opens the valve 40 at the front stage of the methane oxidation catalyst device 20 and closes the valve 50 on the bypass line and the valve 30 at the front stage of the selective catalytic reduction device 10, thereby controlling exhaust gas generated by the natural gas engine to flow along the methane oxidation catalyst line L2.

Furthermore, when the exhaust gas does not undergo post-processing procedure, or when only some of the exhaust gas undergoes post-processing procedure, the control unit 100 can control at least some of the exhaust gas to bypass the selective catalytic reduction device 10 and the methane oxidation catalyst device 20, and flow along the bypass line BL.

For example, the control unit 100 can open valve 50 on the bypass line BL and close valve 40 at the front stage of the methane oxidation catalyst device 20 and valve 30 at the front stage of the selective catalytic reduction device 10, thereby controlling all of the exhaust gas to flow along the bypass line BL. The control unit 100 can also close valve 40 at the front stage of the methane oxidation catalyst device 20, and control the valves 30 and 50 so that some of the exhaust gas flows to the selective catalytic reduction device 10 and some others flow to the bypass line BL.

The selective catalytic reduction line L1, the methane oxidation catalyst line L2, and the bypass line BL are configured in parallel, and thus exhaust gas that has passed through one line cannot pass further through the other lines.

The selective catalytic reduction device 10 and the methane oxidation catalyst device 20 are disposed adjacent to each other to allow heat transfer each other. This is not only to facilitate the utilization of space inside the ship, but also to allow heat generated by the post-processing device, in which exhaust gas passes and undergoes a reaction, to be transferred to the post-processing device, in which exhaust gas does not pass and no reaction occurs. For example, when diesel fuel is used to generate exhaust gas, the exhaust gas passes through the selective catalytic reduction device 10 along the selective catalytic reduction line L1. At this time, the temperature of the selective catalytic reduction device 10 rises due to the exothermic catalytic reaction. This heat is transferred to the adjacent methane oxidation catalyst device 20, in which exhaust gas does not pass and no catalytic reaction occurs, thereby preheating the methane oxidation catalyst device 20. When gas fuel is subsequently used and the exhaust gas passes through the methane oxidation catalyst device 20, since the methane oxidation catalyst device 20 is preheated, it is possible to reduce the heat required to be supplied initially in the methane oxidation catalyst reaction.

In contrast to the previous example, the selective catalytic reduction device 10 can be preheated by the catalytic reaction that occurs in the methane oxidation catalyst device 20. This improves the thermal efficiency of the entire exhaust gas post-processing system 1.

The bypass line BL can also be disposed adjacent to at least one of the selective catalytic reduction device 10 and the methane oxidation catalyst device 20 so that heat can be transferred with at least one of the selective catalytic reduction device 10 and the methane oxidation catalyst device 20. This is not only to facilitate the utilization of space inside the ship, but also to allow heat generated in the post-processing device, in which exhaust gas passes and reactions occur, to be transferred to the bypass line BL, in which exhaust gas does not pass, or allow heat of the exhaust gas bypassed through the bypass line BL to be transferred to the post-processing device in which exhaust gas does not pass and reactions do not occur.

When exhaust gas does not pass through the bypass line BL, there is a risk of low-temperature corrosion, while the temperature inside the bypass line BL drops. Therefore, if the heat generated in the post-processing device, in which exhaust gas passes and reactions occur, is transferred to the bypass line BL in which exhaust gas does not pass, low-temperature corrosion can be prevented.

If the heat of the exhaust gas bypassed through the bypass line BL is transferred to the selective catalytic reduction device 10 or the methane oxidation catalyst device 20, in which the exhaust gas does not pass and no reaction occurs, the selective catalytic reduction device 10 or the methane oxidation catalyst device 20 is preheated as described above to enhance thermal efficiency of the entire exhaust gas post-processing system 1.

The selective catalytic reduction device 10, the methane oxidation catalyst device 20, and at least one region of the bypass line BL can be disposed inside a single housing 80. Disposing them inside the single housing 80 enables partial preheating using the heat of the exhaust gas, thereby saving energy required for preheating and reducing the preheating time, and thus further improving the thermal efficiency of the entire exhaust gas post-processing system 1.

As shown in FIG. 2A, the bypass line BL can be disposed adjacent to each of the selective catalytic reduction device 10 and the methane oxidation catalyst device 20, and between the selective catalytic reduction device 10 and the methane oxidation catalyst device 20. As shown in FIG. 2B, the selective catalytic reduction device 10 and the methane oxidation catalyst device 20 are directly adjacent to each other, and the bypass line BL can be disposed adjacent to them. However, this is merely an exemplary example of the exhaust gas post-processing system 1 according to the first embodiment of the present invention, and is not limited thereto.

### <Second Example>

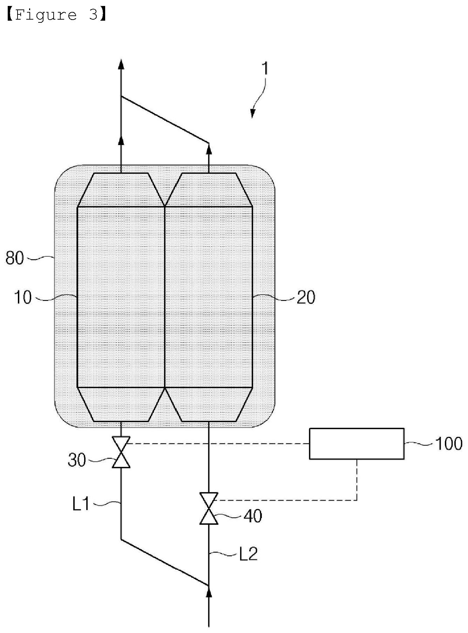

FIG. 3 is a diagram illustrating an exhaust gas post-processing system according to a second embodiment of the present invention.

Referring to FIG. 3, an exhaust gas post-processing system 1 according to the second embodiment of the present invention includes a selective catalytic reduction device 10 provided on a selective catalytic reduction line L1; a methane oxidation catalyst device 20 provided on a methane oxidation catalyst line L2; and a control unit 100 that controls exhaust gas generated from diesel fuel to flow through the selective catalytic reduction line L1 and controls exhaust gas generated from gas fuel to flow through the methane oxidation catalyst line L2, wherein the selective catalytic reduction line L1 and the methane oxidation catalyst line L2 are configured in parallel, the selective catalytic reduction device 10 and the methane oxidation catalyst device 20 are disposed adjacent to each other to enable heat transfer therebetween, and the control unit 100 controls exhaust gas to flow through the selective catalytic reduction line L1 when bypassing exhaust gas generated from gas fuel. Differences from the first embodiment will be mainly described below.

The exhaust gas post-processing system 1 according to the second embodiment of the present invention does not have a separate bypass line, and the selective catalytic reduction line L1 serves as a bypass line for the methane oxidation catalyst line L2.

The control unit 100 is identical to the first embodiment 1 in that it controls exhaust gas generated by a diesel fuel engine to remove nitrogen oxides, while passing through the selective catalytic reduction device 10 on the selective catalytic reduction line L1, and controls exhaust gas generated by a natural gas engine to remove methane, while passing through the methane oxidation catalyst device 20 on the methane oxidation catalyst line L2.

However, differences arise when exhaust gas generated by a natural gas engine does not pass through the methane oxidation catalyst device 20, or when only some of the exhaust gas pass through the methane oxidation catalyst device 20. The control unit 100 can control at least some of the exhaust gas to flow along the selective catalytic reduction line L1 by bypassing the methane oxidation catalyst device 20. That is, the selective catalytic reduction line L1 can be a bypass line for the methane oxidation catalyst line L2.

For example, when exhaust gas generated by the natural gas engine may be directly discharged into the atmosphere without passing through the methane oxidation catalyst device 20, the control unit 100 can open the valve 30 at the front stage of the selective catalytic reduction device 10 and close the valve 40 at the front stage of the methane oxidation catalyst device 20 to control the exhaust gas generated by the natural gas engine to flow along the selective catalytic reduction line L1. This is possible because there is no problem of the catalyst used in the selective catalytic reduction reaction to become contaminated or lose its function, even when the exhaust gas generated by the natural gas engine passes through the selective catalytic reduction device 10. However, since the methane oxidation catalyst may lose its function when it comes into contact with exhaust gas generated by a diesel engine, it is not possible to control exhaust gas generated by the diesel fuel engine to flow along the methane oxidation catalyst line L2.

The selective catalytic reduction device 10 and the methane oxidation catalyst device 20 can be disposed adjacent to each other to enable heat transfer therebetween, and as described above, this can not only facilitate the utilization of the space inside the ship, but also enhance the thermal efficiency of the entire exhaust gas post-processing system 1 by preheating the exhaust gas post-processing device in which the post-processing reaction does not occur by the exhaust gas post-processing device in which the post-processing reaction occurs.

The selective catalytic reduction device 10 and the methane oxidation catalyst device 20 can be disposed inside the single housing 80. Disposing them within the single housing 80 enables partial preheating using the heat of the exhaust gas, thereby saving energy required for preheating and shortening the preheating time, and enhancing heat transfer efficiency, and thus further improving the thermal efficiency of the entire exhaust gas post-processing system 1.

### <Third Example>

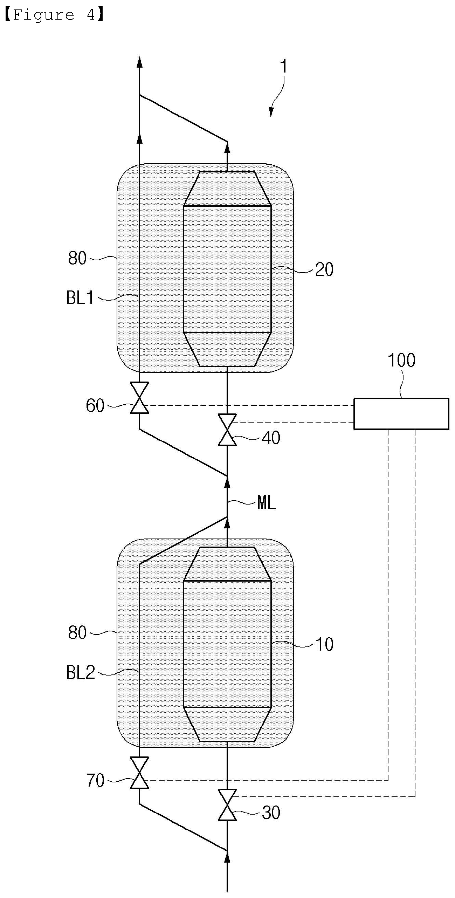

FIG. 4 is a diagram illustrating an exhaust gas post-processing system according to a third embodiment of the present invention.

Referring to FIG. 4, an exhaust gas post-processing system 1 according to the third embodiment of the present invention includes a selective catalytic reduction device 10 provided on the exhaust gas main line ML; a methane oxidation catalyst device 20 provided on the exhaust gas main line ML at a rear stage of the selective catalytic reduction device 10; and a first bypass line BL1 which branches off from the exhaust gas main line ML between the selective catalytic reduction device 10 and the methane oxidation catalyst device 20 and bypasses the methane oxidation catalyst device 20, wherein the methane oxidation catalyst device 20 and the first bypass line BL1 are disposed adjacent to each other to allow heat transfer each other. Each component will be described in detail below.

Unlike the first and second embodiments, in the exhaust gas post-processing system 1 according to the third embodiment of the present invention, the selective catalytic reduction device 10 and the methane oxidation catalyst device 20 are connected in series. Therefore, the exhaust gas passing through the selective catalytic reduction device 10 can further pass through the methane oxidation catalyst device 20.

Nitrogen oxides is removed from the exhaust gas generated by a diesel fuel engine, while passes through the selective catalytic reduction device 10, and the exhaust gas after passing through the selective catalytic reduction device 10 bypasses the methane oxidation catalyst device 20 via the first bypass line BL1. This is because, as mentioned above, there is a risk that methane oxidation catalysts may lose their function if they come into contact with exhaust gas generated by a diesel fuel engine.

For example, the control unit 100 can open the valve 30 at the front stage of the selective catalytic reduction device 10, and control the exhaust gas generated by the diesel fuel engine to pass through the selective catalytic reduction device 10. Next, the control unit 100 can close the valve 40 at the front stage of the methane oxidation catalyst device 20, and open the valve 60 on the first bypass line BL1 to control the exhaust gas generated by a diesel fuel engine to bypass without passing through the methane oxidation catalyst device 20.

Exhaust gas generated by a gas fuel engine passes through the selective catalytic reduction device 10 and enters the methane oxidation catalyst device 20 whereby methane is removed through the methane oxidation catalytic reaction. Since the catalyst of the selective catalytic reduction device 10 has no risk of losing its function even when it comes into contact with exhaust gas generated by the gas fuel engine, the exhaust gas does not need to bypass the selective catalytic reduction device 10.

For example, the control unit 100 can open the valve 30 at the front stage of the selective catalytic reduction device 10, and control the exhaust gas generated by the gas fuel engine to pass through the selective catalytic reduction device 10. Next, the control unit 100 can open the valve 40 at the front stage of the methane oxidation catalyst device 20, and close the valve 60 on the first bypass line BL1 to control the exhaust gas generated by the gas fuel engine to pass through the methane oxidation catalyst device 20. If necessary, the control unit 100 can control the valves 40 and 60 so that at least some of the exhaust gas generated by the gas fuel engine flows through the first bypass line BL1.

Additionally, the exhaust gas post-processing system 1 according to the third embodiment of the present invention may further include a second bypass line BL2 that branches off from the exhaust gas main line ML at the front stage of the selective catalytic reduction device 10 and bypasses the selective catalytic reduction device 10.

When the exhaust gas does not undergo post-processing, or when only some of the exhaust gas undergoes post-processing, the control unit 100 can control at least some of the exhaust gas to bypass the selective catalytic reduction device 10 and the methane oxidation catalyst device 20 and flow along the second bypass line BL2 and the first bypass line BL1.

For example, the control unit 100 can close the valve 30 at the front stage of the selective catalytic reduction device 10, and open the valve 70 on the second bypass line BL2 to control the exhaust gas to flow along the second bypass line BL2. Further, the control unit 100 can close the valve 40 at the front stage of the methane oxidation catalyst device 20, open the valve 60 on the first bypass line BL1 to control the exhaust gas to flow along the first bypass line BL1.

The selective catalytic reduction device 10 and the second bypass line BL2, and the methane oxidation catalyst device 20 and the first bypass line BL1 can be disposed adjacent to each other to enable heat transfer therebetween, thereby not only facilitating the utilization of space inside the ship but also enhancing the thermal efficiency of the entire exhaust gas post-processing system 1 through prevention of low-temperature corrosion of the bypass line and preheating of the post-processing device.

The methane oxidation catalyst device 20 and at least one region of the first bypass line BL1 can be disposed inside a single housing, or the selective catalytic reduction device 10 and at least one region of the second bypass line BL2 can be disposed inside the single housing 80. Disposing them inside the single housing 80 enables partial preheating using the heat of the exhaust gas, thereby saving energy required for preheating and reducing the preheating time, and thus enhancing heat transfer efficiency, and further improving the thermal efficiency of the entire exhaust gas post-processing system 1.

Additionally, a ship may include the exhaust gas post-processing system 1 according to an embodiment of the present invention.

The above description is merely an exemplary description of the technical idea of the present invention, and thus various modifications and variations can be made without departing from the essential characteristics of the present invention by those skilled in the art to which the present invention pertains. Therefore, the embodiments disclosed in the present invention are used not to limit but to describe the technical idea of the present invention, and the scope of technical idea of the present invention is not limited to the embodiments. It should be interpreted that the protection scope of the present invention is defined by the following claims, and that all technical ideas within a scope equivalent thereto are included in the scope of rights of the present invention.

## Claims

1. An exhaust gas post-processing system, comprising:
a selective catalytic reduction device provided on a selective catalytic reduction line;
a methane oxidation catalyst device provided on a methane oxidation catalyst line; and
a bypass line through which exhaust gas bypasses so as not to pass through the selective catalytic reduction device and the methane oxidation catalyst device,
wherein the selective catalytic reduction line, the methane oxidation catalyst line, and the bypass line are configured in parallel, and
the selective catalytic reduction device and the methane oxidation catalyst device are disposed adjacent to each other to enable heat transfer therebetween.

2. The exhaust gas post-processing system according to claim 1,
wherein the bypass line is disposed adjacent to at least one of the selective catalytic reduction device or the methane oxidation catalyst device to enable heat transfer with at least one of the selective catalytic reduction device and the methane oxidation catalyst device.

3. The exhaust gas post-processing system according to claim 1, further comprising:
a control unit configured to
control exhaust gas generated from diesel fuel to flow through the selective catalytic reduction line or the bypass line, and
control exhaust gas generated from gas fuel to flow through the methane oxidation catalyst line or the bypass line.

4. The exhaust gas post-processing system according to claim 1,
wherein the selective catalytic reduction device, the methane oxidation catalyst device, and at least one region of the bypass line is disposed inside a single housing.

5. An exhaust gas post-processing system, comprising:
a selective catalytic reduction device provided on a selective catalytic reduction line;
a methane oxidation catalyst device provided on a methane oxidation catalyst line; and
a control unit configured to control exhaust gas generated from diesel fuel to flow through the selective catalytic reduction line, and control exhaust gas generated from gas fuel to flow through the methane oxidation catalyst line,
wherein the selective catalytic reduction line and the methane oxidation catalyst line are configured in parallel, and the selective catalytic reduction device and the methane oxidation catalyst device are disposed adjacent to each other to enable heat transfer therebetween, and
the control unit controls exhaust gas to flow through the selective catalytic reduction line when bypassing exhaust gas generated from the gas fuel.

6. The exhaust gas post-processing system according to claim 5,
wherein the selective catalytic reduction device and the methane oxidation catalyst device are disposed inside a single housing.

7. An exhaust gas post-processing system, comprising:
a selective catalytic reduction device provided on an exhaust gas main line;
a methane oxidation catalyst device provided on the exhaust gas main line at a rear stage of the selective catalytic reduction device; and
a first bypass line configured to branch off from the exhaust gas main line between the selective catalytic reduction device and the methane oxidation catalyst device and bypass the methane oxidation catalyst device,
wherein the methane oxidation catalyst device and the first bypass line are disposed adjacent to each other to enable heat transfer each other.

8. The exhaust gas post-processing system according to claim 7, further comprising:
a second bypass line configured to branch off from the exhaust gas main line at a front stage of the selective catalytic reduction device and bypass the selective catalytic reduction device.

9. The exhaust gas post-processing system according to claim 7, further comprising:
a control unit configured to
control exhaust gas generated from diesel fuel to flow through the first bypass line via the selective catalytic reduction device, and
control exhaust gas generated from gas fuel to flow through the methane oxidation catalyst device or the first bypass line via the selective catalytic reduction device.

10. The exhaust gas post-processing system according to claim 8, further comprising:
a control unit configured to
control exhaust gas generated from diesel fuel to flow through the first bypass line via the selective catalytic reduction device or the second bypass line, and
control exhaust gas generated from gas fuel to flow through the methane oxidation catalyst device or the first bypass line via the selective catalytic reduction device or the second bypass line.

11. The exhaust gas post-processing system according to claim 7,
wherein the methane oxidation catalyst device and at least one region of the first bypass line is disposed inside a single housing.

12. The exhaust gas post-processing system according to claim 8,
wherein the methane oxidation catalyst device and at least one region of the first bypass line is disposed inside a single housing, or the selective catalytic reduction device and at least one region of the second bypass line is disposed inside a single housing.

13. A ship comprising the exhaust gas post-processing system according to any one of claims 1 to 12.
